**Europäisches Patentamt**

**European Patent Office**

**Office européen des brevets**

(11) Numéro de publication: **0 067 733
B1**

(12) **FASCICULE DE BREVET EUROPEEN**

(45) Date de publication du fascicule du brevet:
14.08.85

(21) Numéro de dépôt: **82400860.1**

(22) Date de dépôt: **10.05.82**

(51) Int. Cl.⁴: **F 41 F 5/02**, F 41 H 11/00,
F 42 B 4/22, F 42 B 4/24

(54) Dispositif lance-leurre infrarouge à mise en oeuvre rapide avec double sécurité.

(30) Priorité: **03.06.81 FR 8110976**

(43) Date de publication de la demande:
**22.12.82 Bulletin 82/51**

(45) Mention de la délivrance du brevet:
**14.08.85 Bulletin 85/33**

(84) Etats contractants désignés:
**AT BE CH DE FR GB IT LI LU NL SE**

(56) Documents cités:
**FR - A - 2 036 520
GB - A - 1 534 134
US - A - 2 476 117**

**REVUE INTERNATIONALE DE DEFENCE, 1976, Série
Spéciale: "Avions de Combat", pages 192-194, Genève
(CH); "Equipements de guerre électronique montés sur
avions".**

(73) Titulaire: **SOCIETE E. LACROIX - TOUS ARTIFICES,
Route de Toulouse, F-31600 Muret (FR)**

(72) Inventeur: **Billard, Alain André Aristide, 65, avenue Saint
Germier, F-31600 Muret (FR)**
Inventeur: **Calmettes, Hubert Claude Gilles, 1, rue de
Vals, F-31300 Toulouse (FR)**
Inventeur: **Encoyand, Roland Claude, 31 rue Pierre Fons,
F-31600 Muret (FR)**

(74) Mandataire: **Corre, Jacques Denis Paul et al, Cabinet
Regimbeau 26, Avenue Kléber, F-75116 Paris (FR)**

Description

La présente invention concerne les contre-mesures du type leurre infrarouge, notamment pour aéronef.

Le problème principal rencontré avec ce type de contre-mesures est de concilier:

— les impératifs de «séduction» du missile attaquant, même dans les cas les plus défavorables, qui supposent une mise en oeuvre rapide d'un rayonnement infrarouge intense très près de l'avion, associée à un mouvement relatif leurre-avion suffisamment lent, et

— l'impératif de sécurité, car l'avion ne doit pas être mis en danger par le leurre qu'il fait intervenir pour se défendre.

On a décrit dans l'article intitulé «Equipements de guerre électronique montés sur avions» à la page 192 de la Revue Internationale de Défense 1976, série spéciale «Avions de combat», des éjecteurs de leurres antiradar et infrarouge. Ces dispositifs d'éjection permettent de larguer des leurres en une ou plusieurs fois et se composent d'une boîte de commande et de deux nacelles qui renferment chacune deux modules d'éjection et un sélecteur de largage. Des leurres sont logés dans une série de cartouches placées transversalement à chaque nacelle dont la grande dimension se trouve par conséquent perpendiculaire au sens de l'éjection des cartouches de leurres.

La présente invention présente une solution différente, qui permet que la grande dimension du leurre infrarouge soit disposée transversalement à la direction d'éjection qui est elle-même sensiblement perpendiculaire à l'axe de l'avion, deux leurres de ce type — ou plus — pouvant être superposés dans le dispositif d'éjection. Des dispositifs de sécurité perfectionnés permettent une mise en oeuvre rapide, à faible distance, sans risques pour l'avion à protéger.

Le dispositif lance-leurre infrarouge, selon l'invention comporte classiquement un boîtier lanceur, ainsi qu'au moins un corps de leurre infrarouge logeable dans ce boîtier, et muni d'une chaîne pyrotechnique d'éjection et de mise à feu, le corps de leurre possédant une grande dimension qui s'étend transversalement dans le boîtier lanceur, et la chaîne d'éjection est agencée pour réaliser une éjection du corps de leurre transversalement à sa grande dimension, avec une vitesse faible, ce qui permet de développer un faible maître-couple, en particulier dans le cas d'un avion où la direction d'éjection du leurre se trouve sensiblement normale à l'axe de l'avion.

De façon caractéristique, les moyens d'éjection comprennent un canon défini dans le corps de leurre, et une charge d'éjection mobile à coulissement dans ce canon, ce qui permet de réaliser simplement un canon court et une vitesse faible, avec une accélération forte mais brève.

Le dispositif lance-leurre infrarouge proposé est du type comportant un boîtier lanceur possédant au moins une grande dimension, ainsi qu'au moins un corps de leurre infrarouge logeable dans ce boîtier, et muni d'une chaîne pyrotechnique d'éjection et de mise à feu. Selon différents aspects de l'invention, la chaîne pyrotechnique éjecte les leurres transversalement à leur grande dimension. Elle est comprise dans un bloc d'actionnement adjacent à au moins une charge de leurre infrarouge. Ce bloc comprend un alvéole recevant à coulissement un conteneur de charge d'éjection qui doit rompre une sécurité de pression constituée par un voile pour initier un ensemble retard pyrotechnique et amorce-relais contenu dans un tiroir mobile sous l'effet d'un rappel élastique. La position initiale — tiroir non aligné — est défini par un doigt (premier inhibiteur) en appui latéral sur le boîtier lanceur. La position finale — tiroir aligné — est définie par une butée de sorte que l'amorce relais se trouve en regard d'un voile perforable réalisé dans le bloc en amount d'un canal longitudinal de transmission de feu à l'amorçage des charges infrarouges.

Par ailleurs, le bloc contient également un second organe inhibiteur bloquant normalement le tiroir en position de rupture de chaîne, si l'accélération ne dépasse pas un seuil prédéterminé. Cet organe inhibiteur en fonction de l'accélération comporte une masselotte dont la position initiale est définie par un doigt mû par la pression des gaz issus de la charge d'éjection.

En outre, une tige longitudinale formant poutre traverse le bloc d'actionnement et les charges infrarouges. Cette tige est liée au bloc par poinçonnage. Les charges infrarouges sont fixées à l'ensemble par boulonnage sur la tige derrière des coupelles.

Dans le mode de réalisation préférentiel, le bloc comporte une seconde chaîne de transmission de feu, séparée de la première, et aboutissant à la verticale de l'alvéole de charge d'éjection, sur la face opposée du bloc, ce qui permet d'actionner au préalable un second corps de leurre infrarouge, semblable au premier, et placé en aval de celui-ci dans le boîtier lanceur.

De préférence, la seconde chaîne de transmission de feu est munie en parallèle d'un organe formant valve tarée, qui bi-passe cette seconde chaîne lorsque le premier corps de leurre infrarouge a été éjecté.

En pareil cas, le boîtier lanceur est un module parallélépipédique allongé, muni d'organes de prise mâles susceptibles de coopérer à la façon de queues d'arondes avec des organes de prise femelles d'une règle-support, et les organes de prise sont écartés les uns des autres selon une même progression géométrique le long de la dimension principale du module.

Selon l'invention, le boîtier lanceur comporte des paires de canaux pyrotechniques, initiables indépendamment, échelonnés de part et d'autre le long de l'axe du boîtier lanceur, et disposés dans chaque paire pour coopérer respectivement avec les deux chaînes de transmission de feu d'un bloc d'actionnement associé.

Les canaux pyrotechniques du boîtier lanceur peuvent alors coopérer avec les initiateurs électriques respectifs.

D'autres caractéristiques et avantages de l'invention apparaîtront à la lecture de la description délaillée qui va suivre, faite en référence aux dessins annexés, donnés pour illustrer à titre non limitatif un mode de réalisation préférentiel de l'invention, et sur lesquels:

la figure 1 est une vue en coupe du boîtier lanceur utilisé dans le mode de réalisation préférentiel de la présente invention;

la figure 2 est une vue de dessus du même boîtier lanceur, où apparaît la ligne de coupe A-A de la figure 1;

la figure 3 est une vue en coupe suivant la ligne C-C de la figure 2;

la figure 4 est une vue de dessous partielle du module de la figure 2, intéressant la partie gauche de cette figure;

la figure 5 est une vue en coupe d'un corps de leurre infrarouge selon la présente invention; et

la figure 6 est une vue en coupe suivant la ligne de coupe D-D de la figure 5, cette figure 6 faisant par ailleurs apparaître la ligne de coupe brisée E-E suivant laquelle est prise ladite figure 5.

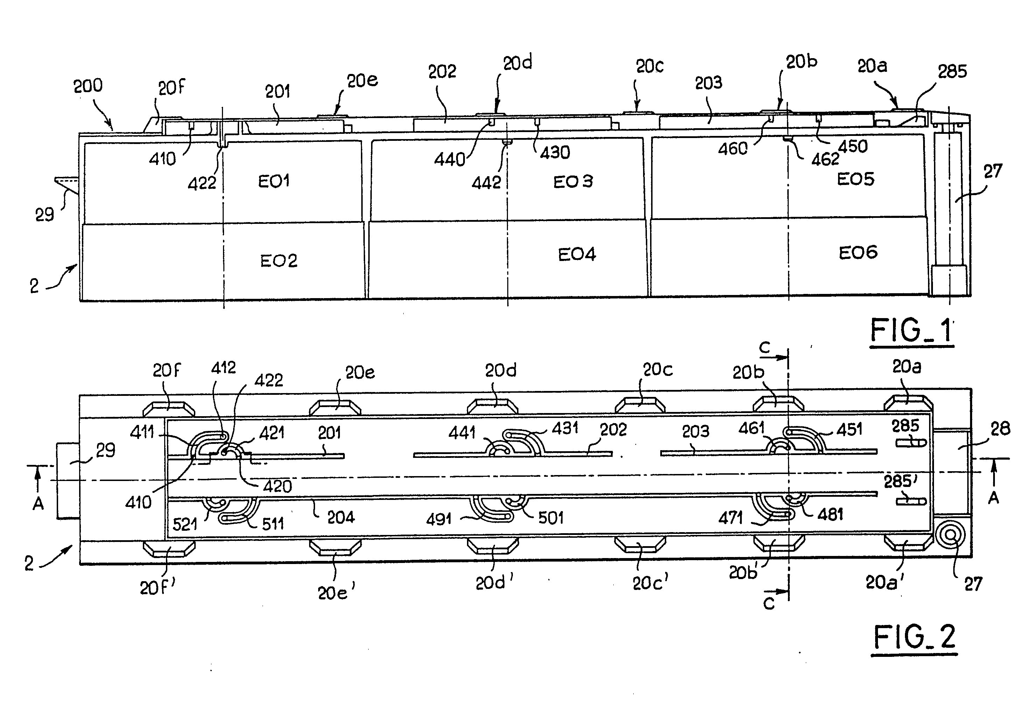

Sur les figures 1 à 4, le boîtier lanceur est désigné par la référence générale 2.

La partie supérieure 200 du boîtier lanceur 2 définit une paroi généralement plane, munie de part et d'autre d'organes de prise mâles 20, susceptibles de coopérer à la façon de queues d'arondes avec des organes de prise femelles d'une règle-support (décrit dans la demande de brevet précitée). Les organes de prise sont écartés les uns des autres selon une même progression géométrique le long de la dimension principale du module et de sa face supérieure 200. Ces organes de prise sont désignés par les références 20a à 20f dans la partie haute de la figure 2, et par les mêmes références affectées du symbole prime dans la partie basse de cette même figure. On reconnaît à gauche des figures une poignée 29. En partie droite, on reconnaît le logement 27 d'un dispositif rotatif qui permet d'effectuer une translation du module par rapport à la règle-support, et d'assurer le verrouillage. Les saillies 285 et 285' permettent la fixation d'un dispositif de connexion électrique, dont l'élément de connecteur fait saillie en 28, pour venir s'enficher sur un connecteur homologue de la règle-support.

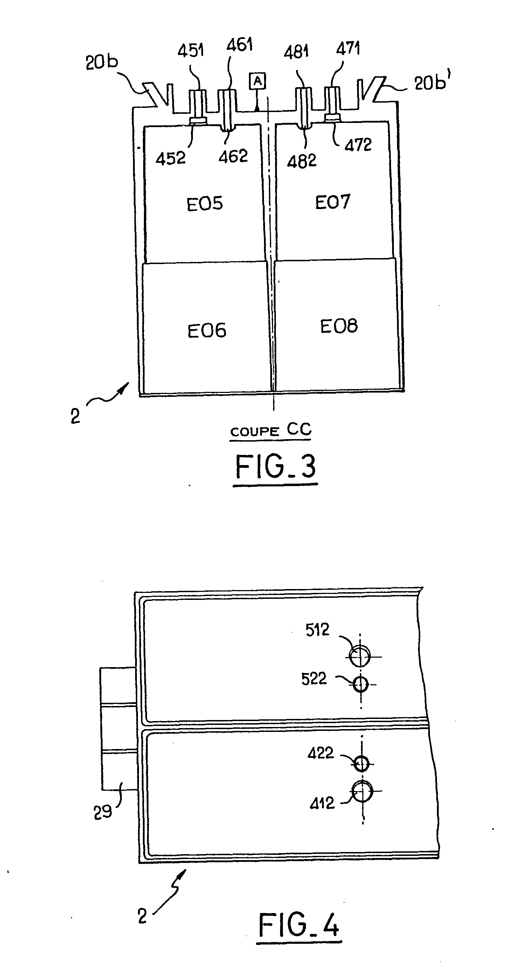

L'intérieur du module est subdivisé longitudinalement en deux parties. Au niveau du trait de coupe A-A de la figure 2, sont définis six emplacements de corps de leurre infrarouge, notés EO1 à EO6 (figure 1). Un nombre égal de leurres peut être disposé dans la partie inférieure, et on distingue les deux premiers d'entre eux, EO7 et EO8, sur la figure 3.

La partie supérieure 200 du module 2 porte des nervures 201, 202, 203 et 204, sur lesquelles s'appuient des canaux pyrotechniques primaires, possédant chacun une entrée telle que 410 (figure 1), une partie principale telle que 411 (figure 2), et une sortie vers l'intérieur du module, telle que 412 (figure 4). D'une manière générale, on désignera ces canaux par leur partie intermédiaire, dont la référence numérique se termine par 1. On voit sur la figure 2 qu'une première paire de canaux 411 et 421 s'appuie sur la nervure 201. Elle permettra comme on le verra plus loin d'exciter les modules placés en EO1 et EO2. Une seconde paire de canaux 431 et 441, appuyée sur la nervure 202, permettra d'exciter les leurres EO3 et EO4. De même, sur la nervure 203 s'appliquent les canaux 451 et 461 relatifs aux leurres EO5 et EO6. La même chose est illustrée sur la partie basse de la figure 2, sauf que la nervure 204 est continue, les références des canaux pyrotechniques primaires augmentant par ailleurs de dix unités à chaque fois. Les figures 1 à 4 montrent que l'un de ces canaux primaires, par exemple 410 à 412, aboutit à l'intérieur du module sur une partie légèrement en creux, telle que 452, et disposée de façon symétrique par rapport à l'emplacement de module tel que EO5. Au contraire, l'autre canal pyrotechnique primaire de la même paire, tel que 461, aboutit par une saillie è l'intérieur du module, numérotée 462 ici, celle-ci étant asymétriquement disposée par rapport à l'emplacement du corps de leurre infrarouge EO5. Les saillies telles 462, et les creux, tels 452, sont destinés à réaliser un emboîtement étanche.

On va maintenant décrire l'un des corps de leurre placé dans l'un des emplacements, cet emplacement étant supposé être EO1.

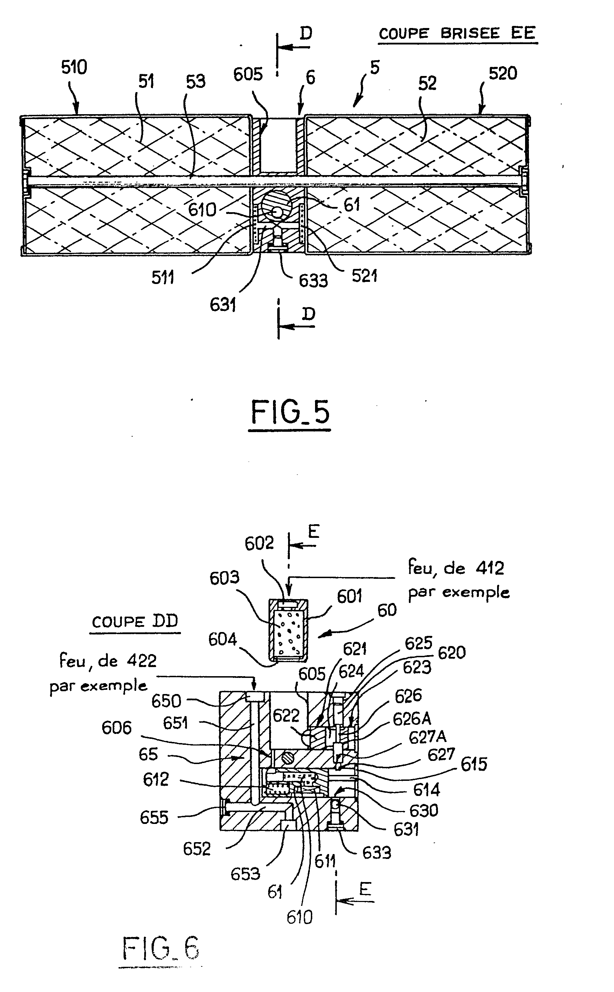

Sur la figure 5, le corps de leurre 5 comprend deux charges de leurre infrarouge 51 et 52, placées de part et d'autre d'un bloc d'actionnement 6, et reliées à celui-ci par une liaison mécanique 53, terminée par des têtes de boulon. Cette liaison mécanique 53, en l'occurrence une tige longitudinale formant poutre traverse le bloc d'actionnement 6 et les charges de leurre infrarouge 51 et 52. Cette tige 53 est liée au bloc 6 par poinçonnage. Les charges infrarouges 51 et 52 sont fixées à l'ensemble par boulonnage sur la tige 53, les charges de leurre 51 et 52 étant disposées dans des coupelles-enveloppes convenables 510 et 520.

Au droit de la sortie 412 du canal pyrotechnique primaire 411 est placé un alvéole 605, qui reçoit un dispositif d'éjection désigné dans son ensemble par 60. Placé à coulissement dans l'alvéole, le dispositif 60 comprend un conteneur 601 de charge d'éjection 603, muni d'une amorce renforçatrice 602. En brûlant, la charge d'éjection 603 doit tout d'abord perforer un voile 604, avant de conférer la poussée requise à l'ensemble constitué par le reste du bloc 6 et les deux charges infrarouges 51 et 52. En variante, le voile 604 est placé dans le bloc 6.

On remarquera que l'éjection de l'ensemble s'assure en balistique inversée, à savoir que le contenant (bloc 6 avec le «canon» 605) est éjecté à la place du contenu («obus» 60). On assure ainsi une poussée importante en même temps que brève sur les charges pyrotechniques, ce qui contribue à une éjection satisfaisante : faible vitesse d'éjection, avec accélération forte mais brève.

La première chaîne pyrotechnique (canal 411 par exemple) continue par un canal 606 percé dans le bloc 6. Après cela est prévue une charge de relais 610, avec retard, suivie d'une amorce 611, cet ensemble étant contenu dans un tiroir 61, mobile transversalement au bloc 6, sous l'effet d'un rappel élastique 612. On observera que ce mouvement s'effectue dans la direction transversale qui est orientée non pas vers les charges 51 et 52, mais vers les parois du module 2.

Si le tiroir 61 s'est déplacé en butée vers la droite (aux conditions que l'on verra ci-après), l'amorce 611 est venue au droit d'un voile 630. Après perçage de celui-ci, le feu est transmis par le canal 631 aux deux charges infrarouges 51 et 52, respectivement équipées des charges d'allumage 511 et 521.

La venue du tiroir 61 en position de transmission de feu est soumise à plusieurs conditions.

Tour d'abord, une tige 614 est montée en appui, à l'encontre du rappel élastique 612, entre le tiroir 61 et une ouverture pratiquée dans une paroi 615 tournée vers une paroi du boîtier-lanceur. Le tiroir ne peut donc être libéré qu'après la sortie du corps de leurre hors du boîtier-lanceur.

En second lieu, l'alésage 605 communique avec un alésage transversal ouvert 623, où coulisse à friction un piston 622 muni d'un joint torique 621. Le piston ne se déplacera vers la droite (figure 6) qu'en présence d'une pression de gaz suffisante après mise à feu de la charge 603 (on se rappellera que la balistique est inversée).

Le piston 622 reçoit dans un perçage radial traversant une masselotte 620, qui à son tour est montée coulissante dans un alésage 625, parallèle à la direction d'éjection. La masselotte 620 est munie en partie médiane d'une restriction de section 626 entre deux épaulements, puis vers le bas, d'un autre épaulement, suivi enfin d'une tête 627. A la construction, l'épaulement 627A placé juste avant la tête 627 bute sur une forme correspondante de l'alésage 625 pratiqué dans le bloc 6. En sens inverse l'épaulement 626A est immobilisé par une butée du perçage radial 624 du piston 622. La masselotte 620 est donc bloquée, et le tiroir 61 ne peut venir en position de transmission de feu, car la tête 627 fait saillie dans l'alésage de ce tiroir 61.

Si la pression des gaz développée par la charge 603 est suffisante (voile 604 crevé), le piston 621 se déplace enbutée vers la droite. Son perçage radial 624 offre alors une section droite suffisante pour le passage de la masselotte 620.

Si maintenant le corps de leurre acquiert une accélération suffisante, la masselotte remonte, libérant alors le tiroir 61. Ce dispositif fonctionne bien même si l'accélération est brève.

Les conditions de mise en oeuvre du leurre infrarouge sont donc:
— pression d'éjection suffisante,
— accélération initiale suffisante,
— éjection effective du leurre.

Les dispositions selon l'invention qui viennent d'être décrites permettend à la fois d'obtenir une excellente mise en oeuvre du leurre infrarouge, en même temps qu'une grande sécurité pour l'avion qui le déploie.

Comme on l'a vu précédemment, la mise en oeuvre préférentielle de l'invention utilise deux coprs de leurre infrarouge montés de manière superposée dans le module lanceur 2.

Le bloc 6 comporte un second canal pyrotechnique, qui démarre par un alvéole 650, susceptible de recevoir par exemple la saillie 422 de l'emplacement de corps de leurre EO1 sur la figure 1. Le feu va alors être transmis par un canal 651, puis un coude 652, et une fin de canal 653, celle-ci aboutissant sur la face opposée du bloc, à la verticale de l'alvéole 605 de charge d'éjection. On voit immédiatement que le feu peut alors être transmis à un bloc semblable au bloc 6, et disposé juste en dessous de celui-ci. Bien entendu, ce corps de leurre inférieur devra être actionné au préalable, de qui se passera dans les mêmes conditions que précédemment.

On a remarqué le bouchon 655 qui referme l'orifice permettant le perçage du canal 652.

De son côté, le corps de leurre inférieur, placé par exemple dans l'emplacement EO2 de la figure 1, pourra être équipé exacterment de la même manière que celui des figures 5 et 6, avec une géométrie correspondant à celle qui est illustrée sur la figure 1. Une façon simple de le faire consiste à prendre des blocs 6 communs et de donner aux charges infrarouges (51 ou 52) une section rectangulaire proche du carré, de façon que, fixées dans un sens, elles entrent dans l'emplacement haut, et que fixées dans le sens perpendiculaire elles aillent dans l'emplacement bas.

Comme les mêmes «pains» infrarouges sont utilisés dans tous les leurres, on a ainsi une excellente reproductibilité.

Bien entendu, si on le désire, le bloc d'actionnement des corps de leurres inférieurs pourra être simplifié, ou légèrement modifié, puisqu'il ne nécessite pas la prévision d'une seconde chaîne de pyrotechnique de transmission.

Si l'on revient maintenant aux figures 1 à 4, on voit que celles-ci permettent d'éjecter en séquence, de manière précisément contrôlée, et avec des risques très réduits pour l'avion, jusqu'à 12 corps de leurre infrarouge.

Ceux-ci sont initiables indépendamment par les paires de canaux pyrotechniques illustrés sur la figure 2. Ces canaux pyrotechniques sont de leur côté initiés par des initiateurs électriques, qui sont placés dans le couloir central de la partie supérieure 202 (figure 2), et peuvent être commandés par des connexions individuelles provenant du connecteur placé en 28, et non représentées. Les initiateurs sont enfermés sous un couvercle, muni d'un joint plat.

**Revendications**

1. Dispositif lance-leurre infrarouge, comportant un boîtier lanceur (2), ainsi qu'au moins un corps de leurre infrarouge (5) logeable dans ce boîtier, et muni d'une chaîne pyrotechnique d'éjection et de mise à feu (60, 61), le corps de leurre (5) possédant une grande dimension qui s'étend transversalement dans le boîtier lanceur, et la chaîne d'éjection est agencée pour réaliser une éjection du corps de leurre transversalement à sa grande dimension, avec une vitesse faible, ce qui permet de développer un faible maître-couple, en particulier dans le cas d'un avion où la direction d'éjection du leurre se trouve sensiblement normale à l'axe de l'avion, caractérisé par le fait que les moyens d'éjection comprennent un canon (605) défini dans le corps de leurre, et une charge d'éjection (60) mobile à coulissement dans ce canon, ce qui permet de réaliser simplement un canon court et une vitesse faible, avec une accélération forte mais brève.

2. Dispositif lance-leurre infrarouge selon la revendication 1, caractérisé par le fait que la chaîne d'éjection et de mise à feu est comprise dans un bloc d'actionnement (6) adjacent à au moins une charge de leurre infrarouge (51, 52), et que ce bloc (6) comprend un alvéole (605) recevant à coulissement un conteneur (601) de charge d'éjection (603), tandis qu'il est prévu un voile (604) perforable lorsque la pression développée par la charge d'éjection est suffisante.

3. Dispositif lance-leurre infrarouge selon l'une des revendications 1 ou 2, caractérisé par le fait que la chaîne d'éjection et de mise à feu continue par une charge de relais avec retard (610, 611) contenue dans un tiroir (61) mobile, sous l'effet d'un rappel élastique (612) entre une position initiale non alignée, définie par un doigt (614) en appui latéral sur le boîtier lanceur, et une position finale alignée définie par une butée, où la charge de relais (611) se trouve en mesure de coopérer avec les charges infrarouges.

4. Dispositif lance-leurre infrarouge selon l'une des revendications 1 à 3, caractérisé par le fait qu'il est prévu au moins un organe inhibiteur (604; 622) sensible à la pression développée par la charge d'éjection.

5. Dispositif lance-leurre infrarouge selon la revendication 3, caractérisé par le fait qu'il est prévu un voile (604) déchirable si la pression développée par la charge d'éjection est suffisante, et un piston (622) susceptible, à la même condition, de libérer une masselotte (620) sensible à l'accélération, cette masselotte empêchant normalement l'alignement du tiroir en position de transmission de feu.

6. Dispositif lance-leurre infrarouge selon l'une des revendications 1 à 5, caractérisé par le fait que le bloc (6) comporte une seconde chaîne (65) de transmission de feu, séparée de la première, et aboutissant (653) à la verticale de l'alvéole de charge d'éjection, sur la face opposée du bloc, ce qui permet d'actionner au préalable un second corps de leurre infrarouge, semblable au premier, et placé en aval de celui-ci dans le boîtier lanceur.

7. Dispositif lance-leurre infrarouge selon l'une des revendications 1 à 6, caractérisé par le fait que le boîtier lanceur (2) est un module parallélépipédique allongé, muni d'organes de prise mâles (20) susceptibles de coopérer à la façon de queues d'arondes avec des organes de prise femelles d'une règle-support, et que les organes de prise sont écartés les uns des autres selon une même progression géométrique le long de la dimension principale du module.

8. Dispositif lance-leurre infrarouge selon la revendication 7, caractérisé par le fait que le boîtier lanceur comporte des paires de canaux pyrotechniques (411, 421, etc.), initiables indépendamment, montées entre ses organes de prise, et disposées dans chaque paire, pour coopérer respectivement avec les deux chaînes de transmission de feu d'un bloc d'actionnement associé.

9. Dispositif lance-leurre infrarouge selon la revendication 8, caractérisé par le fait que les canaux pyrotechniques du boîtier lanceur coopèrent avec des initiateurs électriques respectifs.

**Claims**

1. A device for launching infrared decoys consisting of a launching case (2), as well as at least one infrared decoy body (5) which can be positioned in the case, and provided with a pyrotechnic chain for ejecting and firing (60, 61), the decoy body (5) having a large dimension which extends transversely in the launching case, and the ejection chain is positioned such that it produces an ejection of the decoy body transversely to its large dimension, at a slow speed, which allows a weak main couple to be developed, particularly in the case of an aircraft where the direction of ejection of the decoy body is substantially normal to the axis of the aircraft, characterised by the fact that the ejection means comprise a bore (605) defined in the decoy body and an ejection charge (60) slidable in this bore, which allows a short bore and a slow speed to be produced simply, with a strong but short acceleration.

2. A device for launching infrared decoys according to claim 1, characterised in that the ejection and firing chain is contained in a control block (6) adjacent to at least one charge of infrared decoy (51, 52), and in that this block (6) consists of a cell (605) slidably receiving a container (601) for ejection charge (603), while a cover (604) is provided which is perforable when the pressure developed by the ejection charge is sufficient.

3. A device for launching infrared decoys according to one of claims 1 or 2, characterised in that the ejection and firing chain continues by a relay charge with delay (610, 611) contained in a moveable slide (61), under the effect of an elastic return device (612) between a non-aligned initial position, defined by a cam (614) supported laterally on the launching case, and an aligned final position defined by a stop device, where the relay charge (611) is positioned such that it co-operates with the infrared charges.

4. A device for launching infrared decoys according to one of claims 1 to 3, characterised in that at least one inhibiting member (604; 622) is provided which is sensitive to the pressure developed by the ejection charge.

5. A device for launching infrared decoys according to claim 3, characterised in that a cover (604) is provided which can be ruptured if the pressure developed by the ejection charge is sufficient, and a piston (622) capable, in the same circumstances, of releasing a feeder head (620) sensitive to acceleration, this feeder head normally preventing the alignment of the slide in the fire transmission position.

6. A device for launching infrared decoys according to one of claims 1 to 5, characterised in that the block (6) comprises a second fire transmission chain (65), separated from the first, and terminating (653) at the vertical of the charge ejection cell, on the opposite side of the block, which allows a second infrared decoy body to be activated beforehand, similar to the first, and positioned below the first in the launching case.

7. A device for launching infrared decoys according to one of claims 1 to 6, characterised in that the launching case (2) is an elongated parallelepiped module, provided with male gripping members (20) capable of co-operating in dovetail fashion with the female gripping members of a supporting rule, and that the gripping members are spaced according to a same geometric progression along the principal dimension of the module.

8. A device for launching infrared decoys according to claim 7, characterised in that the launching case consists of pairs of pyrotechnic channels (411, 421 etc.), which can be initiated independently, are fixed between its gripping members and positioned in each pair such that they co-operate in each case with the two fire transmission chains of an associated control block.

9. A device for launching infrared decoys according to claim 8, characterised in that the pyrotechnic channels of the launching case co-operate with respective electrical initiators.

## Patentansprüche

1. Vorrichtung zum Aussetzen von Infrarot-Attrappen mit einem Aussetzgehäuse (2), mindestens einem Infrarot-Attrappenkörper (5), welcher in das Aussetzgehäuse eingebracht werden kann und eine pyrotechnische Auswurf- und Zündkette (60, 61) aufweist, wobei der Attrappenkörper (5) eine grosse Längenausdehnung aufweist, die sich quer im Aussetzgehäuse erstreckt, und die Auswurfkette so eingerichtet ist, dass der Attrappenkörper quer zu seiner Längsdehnung und mit geringer Geschwindigkeit ausgeworfen werden kann, wodurch die Bildung eines schwachen Hauptspants, insbesondere für ein Flugzeug, dessen Auswurfrichtung für die Attrappen im wesentlichen normal zur Flugzeugachse verläuft, ermöglicht wird, dadurch gekennzeichnet, dass die Auswurfeinrichtung einen im Attrappenkörper ausgebildeten Lauf (605) und eine in diesem Lauf verschiebbare Auswurfladung (60) aufweisen, wodurch auf einfache Weise ein kurzer Lauf und eine geringe Geschwindigkeit bei starker, jedoch kurzer Beschleunigung verwirklicht werden können.

2. Vorrichtung nach Anspruch 1, dadurch gekennzeichnet, dass sich die Auswurf- und Zündkette in einem Betätigungsblock (6) befindet, welcher an mindestens eine Infrarot-Attrappenladung (51, 52) angrenzt, und dass der Block (6) einen Hohlraum (605) aufweist, welcher in verschiebbarer Weise einen Behälter (601) für die Auswurfladung (603) aufnimmt, wobei eine Abdeckung (604) vorgesehen ist, die durchbrochen werden kann, wenn der von der Auswurfladung entwickelte Druck dazu ausreicht.

3. Vorrichtung nach Anspruch 1 oder 2, dadurch gekennzeichnet, dass die Auswurf- und Zündkette durch eine Verzögerungs-Relaisladung (610, 611) verlängert wird, die sich in einem Schieber (61) befindet, welcher unter der Wirkung einer elastischen Rückholvorrichtung (612) zwischen einer nicht aneinandergereihten Ausgangsstellung, welche durch einen seitlich auf dem Aussetzgehäuse aufliegenden Zapfen (614) bestimmt wird, und einer aneinandergereihten, durch einen Anschlag bestimmten Endstellung, in der die Relaisladung (611) mit den Infrarotladungen zusammenwirken kann, beweglich ist.

4. Vorrichtung nach Anspruch 1, 2 oder 3, dadurch gekennzeichnet, dass mindestens ein Sperrorgan (604; 622) vorgesehen ist, welches auf den von der Auswurfladung entwickelten Druck reagiert.

5. Vorrichtung nach Anspruch 3, gekennzeichnet durch eine Abdeckung (604), die abgerissen werden kann, wenn der von der Auswurfladung entwickelte Druck dazu ausreicht, und durch einen Kolben (622), welcher unter der gleichen Bedingung einen beschleunigungsempfindlichen Schlagbolzen freisetzt, der normalerweise die Ausrichtung des Schiebers zu der Feuerübertragungsstellung hemmt.

6. Vorrichtung nach einem der Ansprüche 1 bis 5, dadurch gekennzeichnet, dass der Block (6) eine zweite Kette (65) zur Feuerübertragung aufweist, die von der ersten Kette getrennt ist und auf der gegenüber dem Block liegenden Seite an die Vertikale des Hohlraumes für die Auswurfladungen angrenzt, wodurch im vorhinein ein zweiter Infrarot-Attrappenkörper betätigt werden kann, welcher dem ersten Attrappenkörper gleicht und im Aussetzgehäuse unter dem ersten Element gelagert ist.

7. Vorrichtung nach einem der Ansprüche 1 bis 6, dadurch gekennzeichnet, dass das Aussetzgehäuse (2) ein quaderförmiger, länglicher Modul ist, welcher männliche Anschlussorgane (20) aufweist, die schwalbenschwanzartig mit den weiblichen Anschlussorganen eines Halteschiebers zusammenwirken, wobei die Anschlussorgane gemäss ein und derselben geometrischen Folge entlang der Hauptabmessung des Moduls voneinander beabstandet sind.

8. Vorrichtung nach Anspruch 7, dadurch gekennzeichnet, dass das Aussetzgehäuse pyrotechnische Kanalpaare (411, 421, etc.) aufweist, die unabhängig ausgelöst werden können und zwischen den Anschlussorganen angebracht sind und in jedem Paar von Anschlussorganen gelagert sind, um jeweils mit den beiden Feuerübertragungketten eines zugeordneten Betätigungsblocks zusammenzuwirken.

9. Vorrichtung nach Anspruch 8, dadurch gekennzeichnet, dass die pyrotechnischen Kanäle des Aussetzgehäuses jeweils mit elektrischen Auslösern zusammenwirken.

FIG_1

FIG_2

0 067 733

20b  451  461  [A]  481  471  20b'

452  462  482  472

EO5  EO7

EO6  EO8

2

COUPE CC

# FIG. 3

512

522

422

412

29

2

# FIG. 4

COUPE BRISEE EE

510 51 53 605 6 5 52 520

610 61

511 633 521
631

# FIG_5

COUPE DD

602 E

603 601

feu, de 412
par exemple

60

feu, de 422
par exemple

650 605 621 625 620
606 651 624 623
622 626
65 626A
612 627A
655 614 627 615
652 630
653 631
611 633
610

E

# FIG_6